(19) Europäisches Patentamt
European Patent Office
Office européen des brevets

(11) Publication number: **0 132 357 B1**

(12) **EUROPEAN PATENT SPECIFICATION**

(45) Date of publication of patent specification: **08.04.92**

(51) Int. Cl.5: **G02F 1/133**, G02F 1/17

(21) Application number: **84304837.2**

(22) Date of filing: **16.07.84**

(54) **A matrix multi-colour display device.**

(30) Priority: **19.07.83 JP 131510/83**

(43) Date of publication of application:
**30.01.85 Bulletin 85/05**

(45) Publication of the grant of the patent:
**08.04.92 Bulletin 92/15**

(84) Designated Contracting States:
**CH DE FR GB LI**

(56) References cited:
**DE-A- 3 113 041**
**DE-A- 3 325 134**
**GB-A- 866 780**

(73) Proprietor: **SEIKO INSTRUMENTS INC.**
**31-1, Kameido 6-chome Koto-ku**
**Tokyo 136(JP)**

(72) Inventor: **Suginoya, Mitsuru**
**c/o K.K. Daini Seikosha 6-31-1, Kameido**
**Koto-ku Tokyo(JP)**
Inventor: **Iwasa, Koji**
**c/o K.K. Daini Seikosha 6-31-1, Kameido**
**Koto-ku Tokyo(JP)**
Inventor: **Kamamori, Hitoshi**
**c/o K.K. Daini Seikosha 6-31-1, Kameido**
**Koto-ku Tokyo(JP)**
Inventor: **Sano, Yutaka**
**c/o K.K. Daini Seikosha 6-31-1, Kameido**
**Koto-ku Tokyo(JP)**
Inventor: **Terada, Yumiko**
**c/o K.K. Daini Seikosha 6-31-1, Kameido**
**Koto-ku-ku Tokyo(JP)**

(74) Representative: **Miller, Joseph et al**
**J. MILLER & CO. Lincoln House 296-302 High**
**Holborn**
**London WC1V 7JH(GB)**

EP 0 132 357 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to matrix multi-colour display devices.

According to one aspect of the present invention, a method of manufacturing a thin film transistor base element for a matrix multi-colour display, including the step of (i) depositing on a substrate (11) a matrix of thin film transistors arranged in rows and columns, each transistor of each row of transistors having its gate electrode connected to a corresponding row electrode, each transistor of each column of transistors having its source electrode connected to a corresponding column electrode, and each transistor having its drain electrode connected to a corresponding conductive layer which acts as a display electrode, and is characterised by the further steps of (ii) electro-depositing colour filters on selected conductive layers by (a) preparing a solution containing a polymer and a selected colouring matter, (b) dipping said substrate (11) into said solution, and (c) applying voltages to the gate and source electrodes of selected transistors, resulting in an electro-deposition voltage on the corresponding drain electrodes and conductive layers connected thereto, and (iii) repeating for each different colour said steps (a), (b) and (c).

According to another aspect of the present invention, a method of manufacturing a thin film transistor base element for a matrix multi-colour display, including the step of (i) depositing on a substrate (11) matrix of thin film transistors arranged in rows and columns deposited on a substrate, each transistor of each row of transistors having its gate electrode connected to a corresponding row electrode, and each transistor of each column of transistors having its source electrode connected to a corresponding column electrode, and is characterised by the formation in step (i) of a matrix of conductive layers, each connected to a corresponding row electrode or column electrode, and by the further steps of (ii) electro-depositing colour filters on selected conductive layers by (a) preparing a solution containing a polymer and a selected colouring matter, (b) dipping said substrate (11) into said solution, and (c) applying a voltage to the gate electrodes of selected rows, or to the source electrodes of selected columns of transistors, resulting in an electro-deposition voltage on the corresponding conductive layers, (iii) repeating for each different colour said steps (a), (b) and (c), and (iv) forming a matrix of display electrodes on the colour filters and connecting the display electrodes to the corresponding drain electrodes of the transistors.

The invention extends to a matrix multi-colour display device comprising a matrix of thin film transistors arranged in rows and columns deposited on a first substrate, each transistor of each row having its gate electrode connected to a corresponding row electrode, each transistor of each column having its source electrode connected to a corresponding column electrode, and each transistor having its drain electrode connected to a corresponding display electrode, a counter electrode deposited on a second substrate, and display material disposed between the first and second substrates, characterised by a matrix of conductive layers, each corresponding to one of said transistors, being connected to a corresponding row electrode or to a corresponding column electrode, and having electro-deposited thereon a colour filter of a selected colour, and in that each of said display electrodes is deposited on a colour filter.

Preferably the colour filters are electro-deposited from solutions containing a polymer and colouring matter by selective application of an electro-deposition voltage to the row electrode or to the column electrode.

The colouring matter may be a dye.

Preferably the polymer is an acrylic resin containing carboxyl groups of a polyester resin containing carboxyl groups.

The invention is illustrated, merely by way of example, in the accompanying drawings, in which:-

Figure 1 is a schematic diagram of a conventional matrix multi-colour display device;

Figure 2 is a partial, sectioned view of part of the display device of Figure 1;

Figure 3 is a partial, sectioned view of one embodiment of a matrix multi-colour display device according to the present invention;

Figure 4 is a plan view of the matrix multi-colour display device of Figure 3;

Figure 5 is a partial, sectioned view of another embodiment of a matrix multi-colour display device according to the present invention;

Figure 6 is a plan view of the matrix multi-colour display device of Figure 5; and

Figure 7 is a plan view of a further embodiment of a matrix multi-colour display device according to the present invention.

Throughout the drawings like parts have been designated by the same reference numerals.

Figure 1 shows a conventional matrix multi-colour display device using thin film transistors (TFTs). In this conventional matrix multi-colour display device, thin film transistors 1 are arranged in a matrix in such a manner that their gate electrodes 7 are connected in rows to row drivers $R_1$ - $R_n$ while their source electrodes 12 are connected in columns to column drivers $C_1$ - $C_n$, and colour filters 2 of different colours

are provided over display electrodes 13 which are connected to drain electrodes 14 of the thin film transistors. A display material 3, which operates as an optical shutter when a voltage is applied thereto, such as a liquid crystal or an electrochromic material, is interposed between each of the display electrodes 13 and a counter electrode 5 connected to the ground, and a capacitor 4 is connected between each display electrode 13 and either ground or the gate electrode connected to the row driver of the preceding row. There is a delay between the application of an electric signal across the display material 3 and the change in optical characteristics at that point, so the capacitors 4 are provided to extend the time in which the signal voltage is held across the display material to at least its relaxation time, and thus let the display material respond to the signal. Each thin film transistor 1 provides a threshold value therefor.

Figure 2 shows a section through the matrix multi-colour display device of Figure 1. First, two substrates 6,11 are prepared, the substrates 6 having the counter electrode 5 which is transparent over its entire surface and the substrate 11 carrying the gate electrode 7 made of Chromium or Aluminium, a gate electrode pad 8 connected to each gate electrode 7, an insulation layer 9 of silicon oxide (SiO) or aluminium oxide ($Al_2O_3$) over the pads 8, and a semiconductor layer 10 of CdSe or CdS. Source lines 12 of aluminium are formed on top of the semiconductor layer 10 in a direction at right angles to the gate electrodes 7, and a display cell is formed at each intersection of column lines and row lines. The display electrode 13 for each display cell consists of a transparent conductive layer and is connected to the respective drain electrode 14. Each display electrode 13 not only serves as a display electrode but also forms one electrode of the respective capacitor 4 together with the gate electrode pad 8 of the adjacent thin film transistor. The colour filters 2 are formed on the display electrodes 13, and the display material 3 fills the space between the substrate 6 and the substrate 11. In this matrix multi-colour display device, a voltage is applied between specific rows and columns to turn on selected transistors so that a voltage is applied across the display material, the optical shutter is operated, and the colour of the colour filters of the selected display cells is displayed. Thus, a multi-colour display device which can be matrix driven can be obtained by changing the colours of the colour filters of the display cells.

A multi-colour display using colour filters is extremely effective because the method is easy and simple to practice, any desired colour can be obtained, and various display materials and systems can be combined.

When manufacturing this type of matrix multi-colour display device, however, the pattern of display electrodes and the pattern of colour filters formed on the surface of the display electrodes must be arranged so that there is no discrepancy between them. Particularly when making a colour graphic display device using a fine pattern of the three primary colours, there is a serious problem that it is very difficult to form the display electrodes and colour filters without any discrepancy between them. Changing colours to realize a multi-colour display is another problem which makes the production process complicated. Particularly, when the colouring is effected by the use of dyes, resist printing steps must be included to prevent the portions that have already been dyed from being dyed again in subsequent dyeing steps, making the production process all the more complicated. In addition, the resist printing technique itself presents difficult problems which must be solved independently.

To produce the colour filters, screen printing, photolithography and like methods are generally used. Resists are not necessary when using screen printing but there is a limit to the miniaturisation of the pattern that can be produced, so that the greater the number of colours to be displayed, the lower the positional accuracy and thus the greater the discrepancies in the display pattern. Photolithography can provide a fine pattern, but a photolithographic step is necessary for each colour, and resist printing must be provided between dye steps to prevent re-dyeing. Thus, the production process becomes complicated, and the advantage of a simple means of realizing a multi-colour display can no longer be obtained.

Hereinafter, a method of forming a coloured layer by the electrodeposition of a polymer, which is an essential feature of the present invention, will be described.

A method of electrochemically polymerising a monomer on an electrode is one of the methods by which a polymer can be electrodeposited on the electrode. A method by which various vinyl compounds are electrochemically polymerised on an iron sheet to obtain a polymer film has been reported (Metal Surface Technology, Vol.19, No. 12, 1968). Recently, much research has been done on the formation of a conductive polymer such as a polypyrrole or polythienylene by electrochemically polymerising a pyrrole, or thiophene. However, these direct methods of electrochemically polymerising a monomer are not yet suitable for use in making matrix multi-colour display devices because their efficiency is still low, the resultant film is already coloured, and the colouring can not be done as required. Another method of electrodepositing a polymer onto an electrode involves making the polymer insoluble and precipitating it onto the electrode from a polymer solution. One example of such a method is the so-called "electrodeposition coating" method in which a pigment is dispersed in an aqueous polymer solution, a

piece of metal is dipped into the solution to act as an electrode, and a coloured layer is electrodeposited onto the metal. This method is used industrially for coating bodies of automobiles. According to this method, a hydrophilic group such as a carboxyl group is introduced into the polymer and the carboxyl group is neutralized and made water-soluble by an inorganic alkali, an organic amine, etc. An electrode is then dipped into the aqueous solution of the polymer, which is now water-soluble, and when a voltage is applied, the carboxyl anions that have been dissociated in the aqueous solution move by electrophoresis towards the anode and react on the electrode with protons generated by the electrolysis of water, so that the polymer is made insoluble and precipitates. In other words, the reaction expressed by the following equation occurs on the anode, and precipitation of the polymer can be observed:

$$2H_2O \rightarrow 4H^+ + O_2\uparrow + 4e^-$$

$$COO^- + H^+ \rightarrow COOH \qquad \text{(deposition)}$$

This deposition of the polymer can be observed on the cathode. Conversely, if a basic group (such as a polyamine) is used as the hydrophilic group, and it is neutralised and made water-soluble by an acid, the polymer is deposited on the anode.

If the polymer thus electrodeposited is electrically dielectric, it is believed that the electrode will be coated with the polymer and the current will then decrease, thus preventing any further growth of the coating so that no increase in the film thickness can be expected. In practice, however, a complete coating during the initial stages is prevented by bubbles of nascent oxygen resulting from the electrolysis of the water, and a film of a certain thickness can be obtained before an insulating layer is formed. With electrodeposition coating, an impressed voltage of 100 to 200 V is generally used to obtain a film which is 10 to 20 $\mu$m in thickness. For a matrix multi-colour display device thinner colour films are desirable. Accordingly, the resin concentration, the voltage and the solvent composition must be set to optimum values as described in the Examples below. Due to the effect of electro-osmosis, the resultant film has a lower water content and is uniform with a higher bondability compared to a film formed by electrodeposition coating.

Examples of polymers for anionic electrodeposition include, for example, adducts of natural dry oils and maleic acid, alkyd resins into which carboxyl groups are introduced, adducts of epoxy resins and maleic acid, polybutadiene resins into which carboxyl groups are introduced, copolymers of acrylic or methacrylic acid and their esters. Depending upon the properties of the electrodeposited film, other polymers or organic compounds with functional groups can sometimes be introduced into the polymer structure. When light is observed through a colour filter, the coloured filter must be transparent and an acrylic or polyester resin is suitable for this purpose. The number of hydrophilic groups such as carboxyl or hydroxyl groups added to the polymer is important. If there are too many, the electrodeposited layer will not be sufficiently insoluble and the resultant film will be non-uniform. On the other hand, if there are too few, the water solubility during neutralization will not be sufficient.

Although the solvent for the polymer consists principally of water, it also may contain a hydrophilic polymerisation solvent for the polymer such as isopropanol, n-butyl alcohol, t-butyl alcohol, methyl Cellosolve, ethyl Cellosolve, isopropyl Cellosolve, butyl Cellosolve, diethylene glycol methyl ether, diethylene glycol ethyl ether, diacetone alcohol, etc. The type and quantity of hydrophilic solvent added also greatly affects the thickness and uniformity of the resultant electrodeposited film.

When the electrodeposited film is to incorporate a coloured pigment, the charged pigment moves by electrophoresis together with the polymer and is taken up into the resultant film. In a transparent colour filter such as that of a matrix multi-colour display device according to the present invention, the obscuring effect of the pigment is not required, and when the film is thin, its tinting strength is low. Accordingly, in the present invention a dye is preferably electrodeposited together with the polymer. To electrodeposit a dye with a polymer, it is necessary to charge the dye molecules to cause electrophoresis. With a water-soluble dye, the dissociated dye ions provides an effect which is similar to that obtained by the addition of a support base, the result being an increase in the current and film thickness, and non-uniformity of the film. Dyes which are barely soluble or are insoluble in water generally clump together in water, but since the electrodeposited polymer can be considered to be a kind of soap containing both hydrophobic and hydrophilic groups, it has the effect of dispersing the organic dye molecules to some extent. It has thus been found that when combined with a suitable dispersion solvent, the dye becomes fine particles which can be electrodeposited with the polymer. In this case, the rate of electrodeposition of the dye must be

similar to that of the polymer, but this can be controlled by the solvent composition.

Methods of producing matrix multi-colour display devices according to the present invention will now be explained in detail with reference to the following Examples.

EXAMPLE 1

Figures 3 and 4 illustrate an embodiment of a matrix multi-colour display device according to the present invention.

(1) Manufacture of TFT base element

The gate electrodes 7 of the chromium, aluminium, etc. and the display electrode 13 made as a transparent conductive layer of, for example, tin oxide or indium oxide are formed on the substrate 11. The insulating layer 9 is silicon nitride, silicon dioxide ($SiO_2$), etc. and the semiconductor layer 10 of, for example, polysilicon are sequentially laminated over each gate electrode 7, and the source electrodes 12 of aluminium, etc. are formed. The drain electrode 14 of, for example, aluminium is brought into contact with each display electrode 13. The gate electrodes 7 are connected to the respective row lines and the source electrodes 12 are connected to the respective column lines.

A method of producing colour filters by electrodeposition on this substrate will now be explained in detail.

(2) Electrodeposition Step

An electrodeposition bath having the composition set out below is prepared using a paint ("S-Via ED-3000", a product of Jinto Paint) of the following composition:

"S-Via ED-3000"

| | |
|---|---|
| Water-soluble polyester resin<br>Water-soluble malamine resin | 70% by weight |
| Butyl Cellosolve<br>Ethyl Cellosolve<br>n-butanol | 30% by weight |

was used in an electrodeposition bath consisting of:

| Materials | Weight Ratio |
|---|---|
| S-Via ED-3000 | 8 |
| Water | 120 |
| Methyl Cellosolve | 12 |
| Oil-soluble dye | X |

The oil-soluble dyes used are limited to those which are soluble in a hydrophilic solvent. They preferably have a metal complex salt structure which is extremely light-fast. An example of such a dye has the following molecular structure ("Aizen Spilon", "Cleosol Fast" and similar trade names):

Cr complex salt of 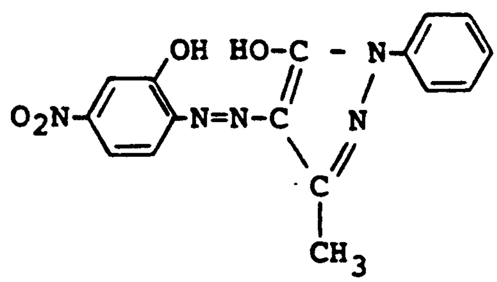

Color index No. Solvent Red 8

The electrodeposition bath is prepared in the following manner. First the S-Via ED-3000 is dissolved in water, and the dye is dissolved in the methyl Cellosolve. In this instance, the dye weight ratio x is selected to be within a range which does not exceed the solubility of the dye in methyl Cellosolve. The methyl Cellosolve in which the dye is dissolved is added to the above aqueous solution of S-Via ED-3000 so that the dye is uniformly dispersed. In this case, the methyl Cellosolve acts as a dispersion medium, but when a large quantity is added, or when there is a large number of carbon atoms in the alkyl group of the Cellosolve, the resultant film will be thick and non-uniform.

The substrate 11 on which the TFTs are formed is then dipped into the electrodeposition bath prepared in the manner described above. Gate and source voltages are applied selectively to the gate electrodes 7 and the source electrodes 12 respectively so that the source voltage is applied to the drain electrodes 14 which are connected to the display electrodes 13 corresponding to the display cells which are to be dyed the same colour, and the selected transistors are turned on. After current has passed for several minutes, electrodeposition is completed. The substrate is removed and washed in water to remove excess electrodeposition bath. Very transparent colour filters 2 are thus formed on the selected display electrodes on the substrate 11.

(3) Curing Step

Next, the polyester and melamine resins in the coloured filters 2 are subjected to a condensation reaction by baking and are cured. When this baking is effected at 175°C for 30 minutes in air, the coloured filters are completely cured.

The coloured filters thus cured become completely electrically insulating layers. Even when they are immersed again and a current is passed trough them, no re-electrodeposition or double dyeing occurs. When forming the second and subsequent differently coloured flters, display electrodes which are to be dyed the same colour but are different from the previous colour filter or filters are selected by applying the gate voltage and source voltage to the selected gate electrodes and source electrodes respectively, and the substrate is again dipped into an electrodeposition bath in which a dye of a different colour is dispersed, followed by a repetition of the electrodeposition and curing step.

In the example described above, red, blue and green colour filters whose transparent conductive layers for the electrodeposition are 200 µm square could be obtained by the following simple procedure: production of a TFT substrate, electrodeposition of red filters, a curing step, electrodeposition of blue filters, a curing step, electrodeposition of green filters, and a curing step. The resultant colour filters are free from colour discrepancies, are uniform in thickness and are resistant to the effect of acids, alkalis, various organic solvents, and hot water. The metal complex salt dyes used, are extremely stable within the colour filters. After a carbon arc light-fastness test of 360 hours, the colour filters exhibited a value of at least 95% of their initial absorbancy and had an excellent light-fastness.

The colour filters 2 are formed in this manner on the TFT substrate, and a matrix multi-colour liquid crystal display device is produced by inserting a twisted nematic liquid crystal material as the display material 3 between the glass substrate 6 provided with a completely transparent conductive film 5 and the substrate 11. In this case, voltages which turn on the transistors are sequentially applied to the gate electrodes 7 and the source electrodes 12, so that a multi-colour matrix display becomes possible. The display electrodes 13 which are connected to the turned-on transistors display the colour of the respective colour filters when the matrix multi-colour display device is interposed between a polarizer with a parallel axis of transmission and an analyzer, while the portions connected to the turned-off transistors appear black. Although simple, the method of producing the matrix multi-colour display device of this Example can provide colour filters which have a fine pattern without reducing display quality, and is found suitable for providing a matrix driven colour graphic display device which is very reliable.

EXAMPLE 2

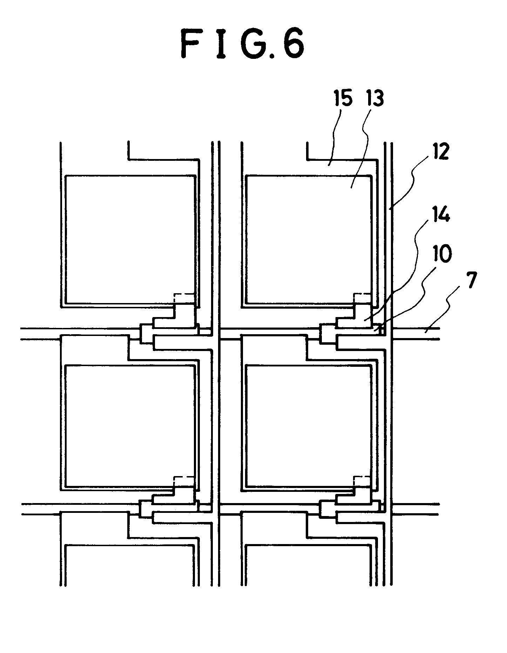

Figures 5 and 6 illustrate another embodiment of a matrix multi-colour display device according to the present invention.

(1) Manufacture of TFT base element

The gate electrodes 7 of chromium, aluminium, etc. are formed on the substrate 11. Transparent conductive layers 15 by electrodeposition of tin oxide, indium oxide, etc. are formed so as to come into contact with the gate electrodes 7. The insulating layers 9 of, for example, silicon nitride are formed over the gate electrodes 7. The semiconductor layer 10 of, for example, amorphous silicon, drain electrodes 14 and source electrodes 12 are formed on each insulating layer 9.

(2) Electrodeposition Step

The substrate 11 is then dipped in the electrodeposition bath of Example 1 and a positive voltage is

applied to selected gate electrodes 7. The transparent conductive layers 15 connected to these gate electrodes become anodes, and colour filters 2 of the same colour are electrodeposited onto the transparent conductive layers 15 for electrodeposition connected to the gate electrodes 7 to which the voltage is applied. The following steps are carried out after washing the substrate 11 with water.

(3) Curing Step

Same as the curing step of Example 1.

(4) Production of Display Electrodes

Transparent display electrodes 13 of tin oxide, indium oxide, etc. are formed on the colour filters 2, and are connected to respective drain electrodes 14 connected to adjacent transistors.

In this Example, red, blue and green colour filters, of whose transparent conductive layers for the electrodeposition are 200 µm square could be sequentially produced by the following simple procedure: the production of a TFT substrate, electrodeposition of red filters, a curing step, electrodeposition of blue filters, a curing step, electrodeposition of green filters, a curing step, followed by the production of display electrodes for the gate electrodes. Thereafter a matrix multi-colour display device was produced in the same way as in Example 1.

In addition to the effects described for Example 1, this embodiment provides the following advantages. First, since the colour filters 2 are positioned below the display electrodes 13, no voltage drop occurs across the colour filters, the voltage driving the liquid crystal material can be reduced, and since the colour filters 2 are between the gate electrodes 7 and the drain electrodes 14 of adjacent transistors, as shown in the circuit diagram of Figure 1, they act as capacitors for mitigating the response. However, the colour filters 2 connected to the common gate electrodes 7 are of the same colour, so that freedom of colour disposition is small.

## EXAMPLE 3

As shown in Figure 7, a matrix multi-colour display device according to the present invention was produced by connecting the transparent conductive layers 15 for electrodeposition to the source electrodes 12 instead of to the gate electrodes 7, and then applying the electrodeposition voltage to the source electrodes to produce a display device in which the lines of common source electrodes had the same colour, as in Example 2. Substantially the same effects as those of Example 2 were obtained.

## EXAMPLE 4

An electrodeposition bath having the composition set out below is prepared using the paint ("POWERMITE 3000-10", a product of Nippon Paint) having the following composition:

POWERMITE 3000-10

| | |
|---|---|
| Water-soluble acrylic resin<br>Water-soluble melamine resin | 60% by weight |
| Butyl Cellosolve<br>Isopropyl alcohol | 40% by weight |

Electrodeposition bath

| Material | Weight Ratio |
|---|---|
| POWERMITE 3000-10 | 10 |
| Water | 120 |
| Ethylene glycol | 20 |
| Dispersion dye | X |

The dispersion dyes used preferably do not contain any dispersant because commercially available dyes mostly contain anionic dispersants which change to ions in the electrodeposition bath and result in an increase in current. The electrodeposition bath is mixed by uniformly dispersing the dispersion dye in the ethylene glycol, within the range of X < 1.5, and then adding the dispersion to an aqueous solution in which

is dissolved the POWERMITE 3000-10.

A matrix multi-colour liquid crystal display device was produced by following the same procedures as in Example 1, and substantially the same effects as those of Example 1 were obtained. It was found, however, that dyes that produce light-fast colour filters were limited to oil-soluble, metal complex salt dyes.

EXAMPLE 5

The composition of the electrodeposition bath in Example 1 was changed to the following composition:

| Material | Weight Ratio |
|---|---|
| S-Via ED-3000 | 20 |
| Water | 120 |
| Oil-soluble dye | X |

In this case, the electrodeposition bath is mixed by adding the oil-soluble dye to the S-Via ED-3000, in the range of $x < 1.0$, and this is uniformly dispersed by kneading, ultrasonic waves, etc. Then the water is added to form the electrodeposition bath. When a matrix multi-colour display device was produced in the same way as in Example 1, the same effects as those of Example 1 were obtained. The oil-soluble dyes used in this Example are not limited to those which are soluble in hydrophilic solvents, but, needless to say, are preferably very light-fast.

The above Examples describe methods of producing matrix multi-colour display devices in accordance with the present invention, the methods being simple and easy, and colour filters can be produced without needing to provide special means for separating colours, such as resist printing. The colour filters are rigid and free from patterning discrepancies. When combined with display materials such as liquid crystal materials, the colour filters provide a high display quality and reliability.

Moreover, any one of each of the drain, source and gate electrodes on the TFT substrate can be used as the electrode for the electrodeposition, the structure of the TFTs need not be changed drastically to effect the electrodeposition, and the colour filters can be formed by electrodeposition so as to be positioned on or beneath the display electrodes.

**Claims**

**1.** A method of manufacturing a thin film transistor base element for a matrix multi-colour display, including the step of (i) depositing on a substrate (11) a matrix of thin film transistors (1) arranged in rows and columns each transistor (1) of each row of transistors having its gate electrode connected to a corresponding row electrode (7), each transistor (1) of each column of transistors having its source electrode connected to a corresponding column electrode (12), and each transistor (1) having its drain electrode (14) connected to a corresponding conductive layer (13) which acts as a display electrode, characterised by the further steps of (ii) electro-depositing colour filters (2) on selected conductive layers (13) by (a) preparing a solution containing a polymer and a selected colouring matter, (b) dipping said substrate (11) into said solution, and (c) applying voltages to the gate and source electrodes of selected transistors (1), resulting in an electro-deposition voltage on the corresponding drain electrodes (14) and conductive layers (13) connected thereto, and (iii) repeating for each different colour said steps (a), (b) and (c).

**2.** A method of manufacturing a thin film transistor base element for a matrix multi-colour display, including the step of (i) depositing on a substrate (11) a matrix of thin film transistors (1) arranged in rows and columns, each transistor (1) of each row of transistors having its gate electrode connected to a corresponding row electrode (7), and each transistor (1) of each column of transistors having its source electrode connected to a corresponding column electrode (12), characterised by the formation in step (i) of a matrix of conductive layers (15), each connected to a corresponding row electrode (7) or column electrode (12), and by the further steps of (ii) electro-depositing colour filters (2) on selected conductive layers (15) by (a) preparing a solution containing a polymer and a selected colouring matter, (b) dipping said substrate (11) into said solution, and (c) applying a voltage to the gate electrodes of selected rows, or to the source electrodes of selected columns of transistors (1), resulting in an electro-deposition voltage on the corresponding conductive layers (15), (iii) repeating for each different colour said steps (a), (b) and (c), and (iv) forming a matrix of display electrodes (13) on the colour filters (2)

and connecting the display electrodes to the corresponding drain electrodes (14) of the transistors (1).

3. A method as claimed in claim 1 or 2, characterised in that the colouring matter is a dye.

4. A method as claimed in claim 3, characterised in that the polymer is an acrylic resin containing carboxyl groups, or a polyester resin containing carboxyl groups.

5. A method as claimed in claim 1, 2, 3 or 4, characterised by curing the electro-deposited filters (2) after step (c).

6. A matrix multi-colour display device comprising a matrix of thin film transistors (1) arranged in rows and columns deposited on a first substrate (11), each transistor (1) of each row having its gate electrode connected to a corresponding row electrode (7), each transistor (1) of each column having its source electrode connected to a corresponding column electrode (12), and each transistor (1) having its drain electrode (14) connected to a corresponding display electrode (13), a counter electrode (5) deposited on a second substrate (6), and display material (3) disposed between the first and second substrates, characterised by a matrix of conductive layers (15), each corresponding to one of said transistors (1), being connected to a corresponding row electrode (7) or to a corresponding column electrode (12), and having electrodeposited thereon a colour filter (2) of a selected colour, and in that each of said display electrodes (13) is deposited on a colour filter (2).

7. A display device as claimed in claim 6, characterised in that the colour filters (2) are electrodeposited from solutions containing a polymer and colouring matter by selective application of an electrodeposition voltage to the row electrode (7) or to the column electrode (12).

8. A display device as claimed in claim 7, characterised in that the colouring matter is a dye.

9. A display device as claimed in claim 8, characterised in that the polymer is an acrylic resin containing carboxyl groups or a polyester resin containing carboxyl groups.

## Revendications

1. Un procédé de fabrication d'un élément de base de transistors à couches minces pour un dispositif de visualisation à couleurs multiples de type matriciel, comprenant l'étape (i) qui consiste à déposer sur un substrat (11) une matrice de transistors à couches minces (1) disposés en lignes et en colonnes, chaque transistor (1) de chaque ligne de transistors ayant son électrode de grille connectée à une électrode de ligne correspondante (7), chaque transistor (1) de chaque colonne de transistors ayant son électrode de source connectée à une électrode de colonne correspondante (12), et chaque transistor (1) ayant son électrode de drain (14) connectée à une couche conducrice correspondante (13) qui remplit la fonction d'une électrode de visualisation, caractérisé par les étapes supplémentaires suivantes : (i) on forme par électrodéposition des filtres de couleurs (2) sur des couches conductrices (13) sélectionnées, par les opérations suivantes : (a) on prépare une solution contenant un polymère et une matière colorante sélectionnée, (b) on plonge le substrat (11) dans cette solution, et (c) on applique des tensions aux électrodes de grille et de source de transistors (1) sélectionnés, ce qui fait apparaître une tension d'électrodéposition sur les électrodes de drain (14) correspondantes et sur les Couches conductrices (13) qui leur sont connectées, et (iii) on répète pour chaque couleur différente les étapes (a), (b) et (c).

2. Un procédé de fabrication d'un élément de base de transistors à couches minces pour un dispositif de visualisation à couleurs multiples de type matriciel, comprenant l'étape (i) qui consiste à déposer sur un substrat (11) une matrice de transistors à couches minces (1), disposés en lignes et en colonnes, chaque transistor (1) de chaque ligne de transistors ayant son électrode de grille connectée à une électrode de ligne (7) correspondante, et chaque transistor (1) de chaque colonne de transistors ayant son électrode de source connectée à une électrode de colonne (12) correspondante, caractérisé par la formation, à l'étape (i), d'une matrice de couches conductrices (15), chacune d'elles étant connectée à une électrode de ligne (7) ou une électrode de colonne (12) correspondante, et par les étapes supplémentaires suivantes : (ii) on forme par électrodéposition des filtres de couleurs (2) sur des couches conductrices (15) sélectionnées, par les opérations suivantes : (a) on prépare une solution

contenant un polymère et une matière colorante sélectionnée, (b) on plonge le substrat (11) dans cette solution, et (c) on applique une tension aux électrodes de grille de lignes sélectionnées, ou aux électrodes de source de colonnes de transistors (1) sélectionnées, ce qui fait apparaître une tension d'électrodéposition sur les couches conductrices (15) correspondantes, (iii) on répète pour chaque couleur différente les étapes (a), (b) et (c), et (iv) on forme une matrice d'électrodes de visualisation (13) sur les filtres de couleurs (2), et on connecte les électrodes de visualisation aux électrodes de drain (14) correspondantes des transistors (1).

**3.** Un procédé selon la revendication 1 ou 2, caractérisé en ce que la matière colorante est un colorant.

**4.** Un procédé selon la revendication 3, caractérisé en ce que le polymère est une résine acrylique contenant des groupes carboxyles, ou une résine de polyester contenant des groupes carboxyles.

**5.** Un procédé selon la revendication 1, 2, 3 ou 4, caractérisé en ce qu'on polymérise les filtres (2) formés par électrodéposition, après l'étape (c).

**6.** Un dispositif de visualisation à couleurs multiples de type matriciel comprenant une matrice de transistors à couches minces (1) disposés en lignes et en colonnes et déposés sur un premier substrat (11), chaque transistor (1) de chaque ligne ayant son électrode de grille connectée à une électrode de ligne (7) correspondante, chaque transistor (1) de chaque colonne ayant son électrode de source connectée à une électrode de colonne (12) correspondante, et chaque transistor (1) ayant son électrode de drain (14) connectée à une électrode de visualisation (13) correspondante, une contre-électrode (5) déposée sur un second substrat (6), et une matière de visualisation (13) placée entre les premier et second substrats, caractérisé par une matrice de couches conductrices (15), chacune d'elles correspondant à l'un des transistors (1), étant connectée à une électrode de ligne (7) correspondante ou à une électrode de colonne (12) correspondante, et étant recouverte par un filtre de couleurs (2) qui est formé par électrodéposition et qui a une couleur sélectionné; et en ce que chacune des électrodes de visualisation (13) est déposée sur un filtre de couleur (2).

**7.** Un dispositif de visualisation selon la revendication 6, caractérisé en ce que les filtres de couleurs (2) sont formés par électrodéposition à partir de solutions contenant un polymère et une matière colorante, par l'application sélective d'une tension d'électrodéposition à l'électrode de ligne (7) ou à l'électrode de colonne (12).

**8.** Un dispositif de visualisation selon la revendication 7, caractérisé en ce que la matière colorante est un colorant.

**9.** Un dispositif de visualisation selon la revendication 8, caractérisé en ce que le polymère est une résine acrylique contenant des groupes carboxyles ou une résine de polyester contenant des groupes carboxyles.

**Patentansprüche**

**1.** Verfahren zur Herstellung eines Dünnschichttransistor-Basiselementenes für eine Matrix-Mehrfarbenanzeige mit dem Schritt (i) Abscheiden einer Matrix von in Zeilen und Spalten angeordneten Dünnschichttransistoren (1), in der die Transistoren (1) jeder Transistorzeile mit ihrer Gate-Elektrode mit einer entsprechenden Zeilenelektrode (7) verbunden sind, die Transistoren (1) jeder Spalte von Transistoren mit ihrer Source-Elektrode mit einer entsprechenden Spaltenelektrode (12) verbunden sind und die Transistoren (1) mit ihrer Drain-Elektrode (14) mit einer entsprechenden als Anzeigeelektrode wirkenden leitenden Schicht (13) verbunden sind, **gekennzeichnet durch** die weiteren Schritte (ii) galvanische Abscheidung von Farbfiltern (2) auf ausgewählten leitenden Schichten (13) durch (a) Bereiten einer ein Polymer und ein ausgewähltes Färbemittel enthaltenden Lösung, (b) Eintauchen des Substrats (11) in die Lösung und (c) Anlegen von Spannungen an die Gate- und Source-Elektroden ausgewählter Transistoren (1) , wodurch eine Spannung für die galvanische Abscheidung an den entsprechenden Drain-Elektroden (14) und den mit diesen verbundenen leitenden Schichten (13) entsteht, und (iii) Wiederholen der Schritte (a), (b) und (c) für die unterschiedlichen Farben.

**2.** Verfahren zur Herstellung eines Dünnschichttransistor-Basiselementes für eine Matrix-Mehrfarbenanzeige mit dem Schritt (i) Abscheiden einer Matrix von in Zeilen und Spalten angeordneten Dünnschichttransistoren (1) auf einem Substrat (11), in der die Transistoren (1) jeder Zeile von Transistoren mit ihrer Gate-Elektrode mit einer entsprechenden Zeilenelektrode (7) und die Transistoren (1) jeder Spalte von Transistoren mit ihrer Source-Elektrode mit einer entsprechenden Spaltenelektrode (12) verbunden sind, **gekennzeichnet durch** die Bildung einer Matrix von leitenden Schichten (15) im Schritt (i), die mit einer entsprechenden Zeilenelektrode (7) oder Spaltenelektrode (12) verbunden sind, und durch die weiteren Schritte (ii) galvanische Abscheidung von Farbfiltern (2) auf ausgewählten leitenden Schichten (15) durch (a) Bereiten einer ein Polymer und ein ausgewältes Färbemittel enthaltenden Lösung, (b) Eintauchen des Substrats (11) in die Lösung und (c) Anlegen einer Spannung an die Gate-Elektroden ausgewählter Zeilen oder die Source-Elektroden ausgewählter Spalten von Transistoren (1), wodurch an den entsprechenden leitenden Schichten (15) eine Spannung für die galvanische Abscheidung entsteht, (iii) Wiederholen der Schritte (a), (b) und (c) für die unterschiedlichen Farben und (iv) Bilden einer Matrix von Anzeigeelektroden (13) auf den Farbfiltern (2) und Verbinden der Anzeigeelektroden mit entsprechenden Drain-Elektroden (14) der Transistoren (1).

**3.** Verfahren nach Anspruch 1 oder 2, **dadurch gekennzeichnet**, daß das Färbemittel ein Farbstoff ist.

**4.** Verfahren nach Anspruch 3, **dadurch gekennzeichnet**, daß das Polymer ein Karboxylgruppen enthaltendes Acrylharz oder ein Karboxylgruppen enthaltendes Polyesterharz ist.

**5.** Verfahren nach Anspruch 1, 2, 3 oder 4, **dadurch gekennzeichnet**, daß die galvanisch abgeschiedenen Filter (2) nach dem Schritt (c) ausgehärtet werden.

**6.** Matrix-Mehrfarben-Anzeigeanordnung mit einer auf einem ersten Substrat (11) abgeschiedenen Matrix von in Zeilen und Spalten angeordneten Dünnschichttransistoren (1), in der die Transistoren (1) jeder Zeile mit ihrer Gate-Elektrode mit einer entsprechenden Zeilenelektrode (7) verbunden sind, die Transistoren (1) jeder Spalte mit ihrer Source-Elektrode mit einer entsprechenden Spaltenelektrode (12) verbunden sind und die Transistoren (1) mit ihrer Drain-Elektrode (14) mit einer entsprechenden Anzeigeelektrode (13) verbunden sind, mit einer auf einem Zweiten Substrat (6) abgeschiedenen Gegenelektrode (5) und mit einem zwischen dem ersten und zweiten Substrat vorgesehenen Anzeigematerial (3), **dadurch gekennzeichnet**, daß eine Matrix von jeweils einem Transistor (1) zugeordneten leitenden Schichten (15) mit einer entsprechenden Zeilenelektrode (7) oder einer entsprechenden Spaltenelektrod (12) verbunden ist, daß auf der Matrix ein Farbfilter (2) mit einer ausgewählten Farbe galvanisch abgeschieden ist, und daß die Anzeigeelektroden (13) auf einem Farbfilter (2) abgeschieden sind.

**7.** Anzeigeanordnung nach Anspruch 6, **dadurch gekennzeichnet**, daß die Farbfilter (2) aus ein Polymer und ein Färbemittel enthaltenden Lösungen durch selektives Anlegen einer Spannung für die galvanische Abscheidung an die Zeilenelektrode (7) oder die Spaltenelektrode (12) galvanisch abgeschieden sind.

**8.** Anzeigeanordnung nach Anspruch 7, **dadurch gekennzeichnet**, daß das Färbemittel ein Farbstoff ist.

**9.** Anzeigeanordnung nach Anspruch 8, **dadurch gekennzeichnet**, daß das Polymer ein Karboxylgruppen enthaltendes Acrylharz oder ein Karboxylgruppen enthaltendes Polyesterharz ist.

FIG. 1

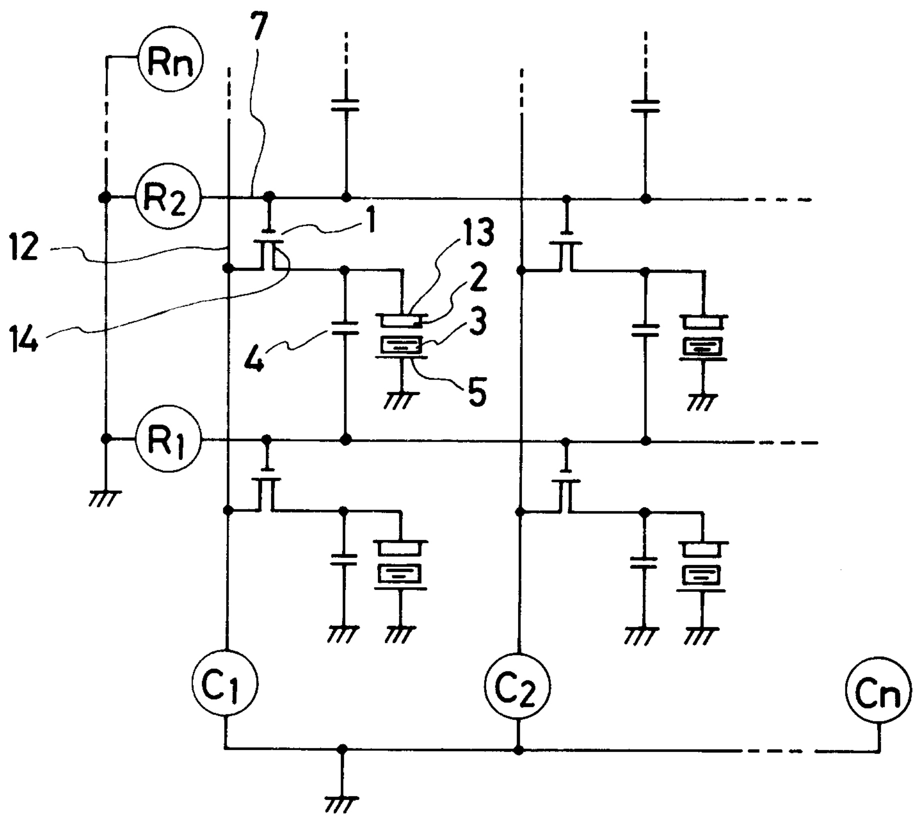


FIG. 2

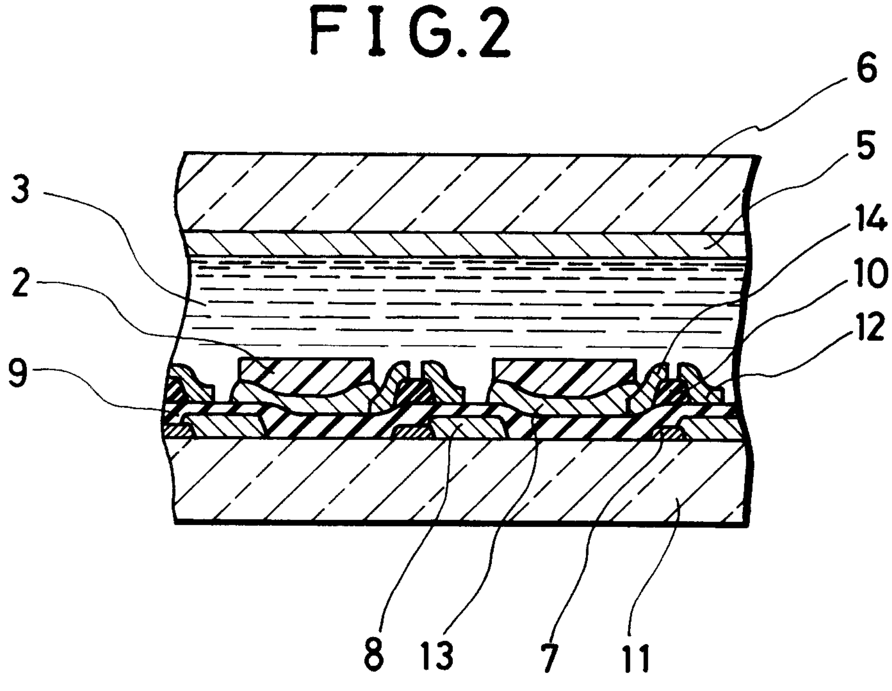

FIG. 3

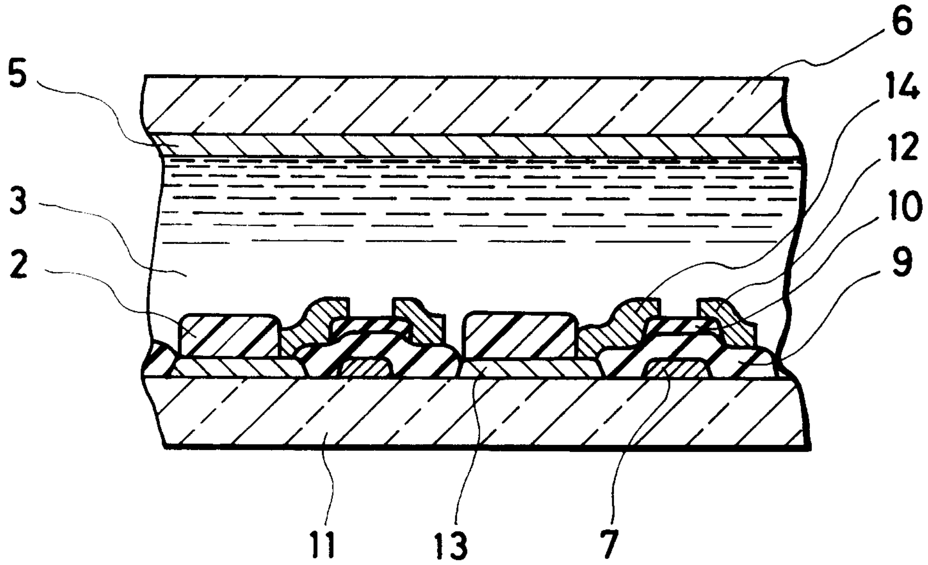


FIG. 4

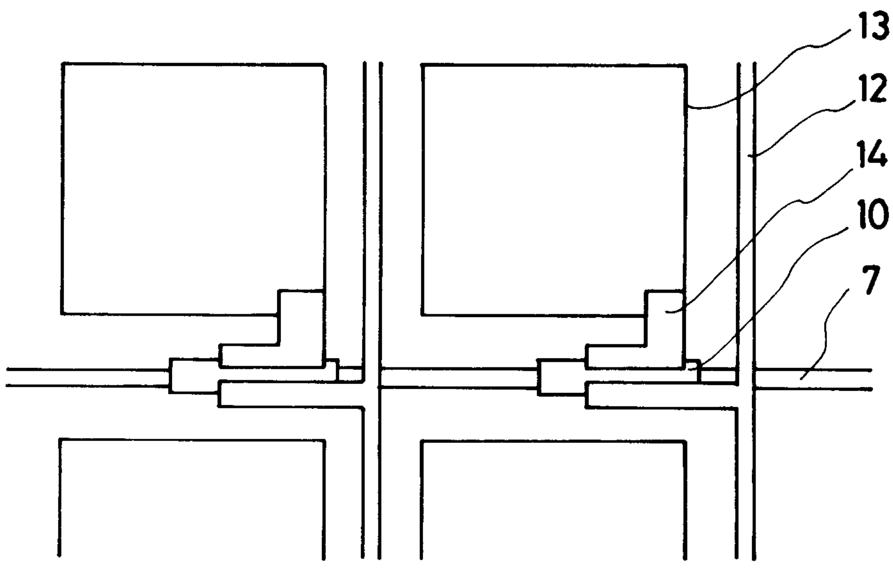

FIG. 5

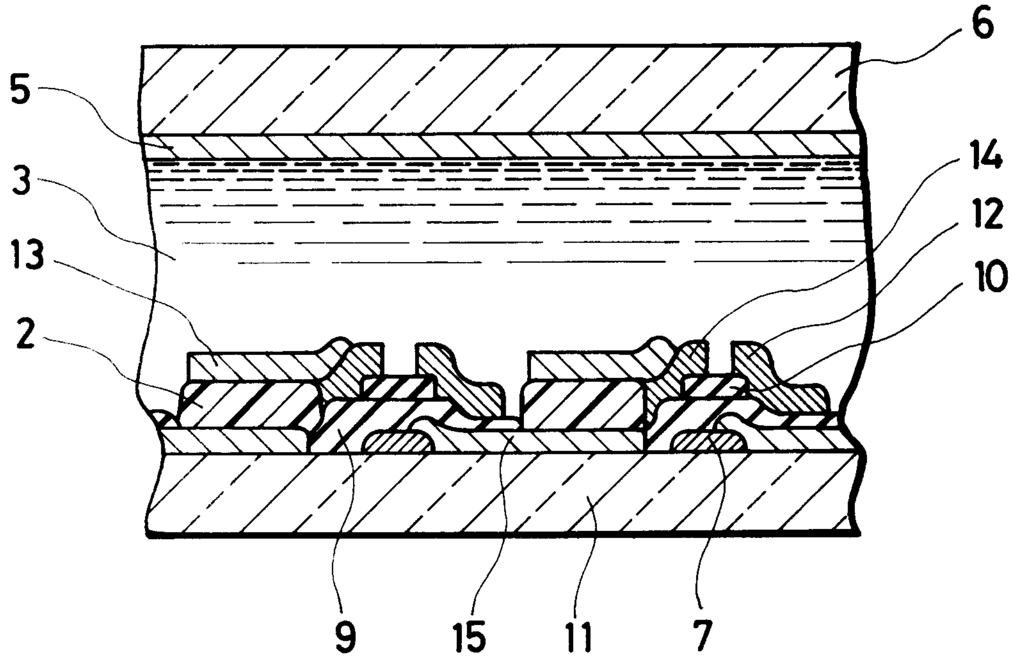


FIG. 7

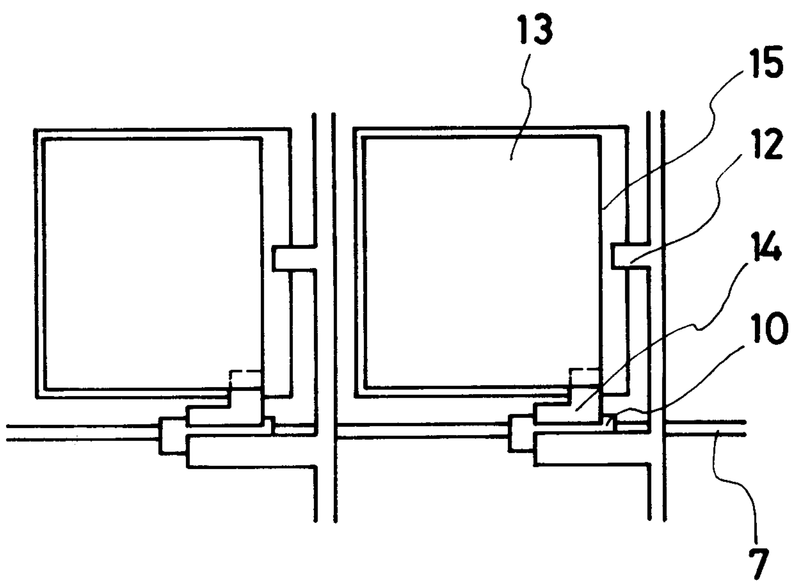

F I G. 6